# EUROPEAN PATENT APPLICATION

(11) **EP 4 545 767 A1**
(43) Date of publication of application: **30.04.2025**
(21) Application number: 23315399.8
(22) Date of filing: 26.10.2023
(51) Int. Cl.: F02C 1/02, F01D 11/04, F01D 25/16, F02C 3/22, F02C 7/06, F02C 7/22, F02C 7/24, F02C 7/28, F04D 29/12

(54) **METHOD FOR OPERATING A TURBO MACHINE, TURBO MACHINE AND METHOD OF MANUFACTURING**

(71) Applicant: Cryostar SAS, 68220 Hesingue (FR)
(72) Inventor: Galland, David, 68220 Hesingue (FR); Lambert, Séverin, 68220 Hesingue (FR); Sgambati, Stephane, 68220 Hesingue (FR)
(74) Representative: Reuß, Stephanie

(57) **Abstract**

The invention relates to a method for operating turbo machine (100) comprising an impeller (110), a bearing (140), and a shaft (130), wherein said impeller (110) is arranged on said shaft (130), and wherein said shaft (130) is supported by said bearing (130), wherein the turbo machine (100) further comprises a dry gas seal (170) configured to seal the shaft (130), and/or wherein the shaft (130) is configured as a hollow shaft; operating the turbo machine comprises processing a cryogenic fluid at a temperature of below -180°C. The invention also relates to a turbo machine and method of manufacturing such turbo machine.

## Description

The present invention relates to a method for operating a turbo machine, e.g., a cryogenic turbo machine, with an impeller mounted on a shaft, such turbo machine and to a method of manufacturing such turbo machine.

### Background

Turbo machines can be used in different applications. For example, in cryogenic applications, i.e. applications with process gases at cryogenic temperatures, e.g., plants for air separation or the like, cryogenic turbo machines like turbo expanders and/or compressors are often used. Such turbo machines typically comprise an expander impeller and/or a compressor impeller, which are fixed on a shaft.

Such turbo machines typically also comprise an inlet or inlet channel configured to guide operating fluid, e.g., gas like the mentioned process gas, to such impeller, and an outlet or outlet channel configured to guide said operating fluid, e.g., after expansion, from that impeller, e.g., to the outside. While the impeller of the turbo machine and a corresponding impeller-sided bearing part (might be kind of a casing) are subject to very cold temperatures, the shaft, its bearing and a corresponding bearing carrier are typically subject to ambient or at least warmer temperatures; bearings, e.g. can even be warmer than ambient temperature. This can lead to massive heat input from the cold to the warm parts, depending on the specific temperatures. It is therefore an object of the present invention to provide an improved turbo machine.

### Disclosure of the invention

This object is achieved by providing a method of operating a turbo machine, a turbo machine and a method of manufacturing such a turbo machine with the features of the independent claims. Embodiments of the invention are the subject of the dependent claims and of the description that follows.

The invention relates to turbo machines, in particular cryogenic turbo machines, like turbo compressors or turbo expanders with an impeller arranged or mounted on a shaft, and to operating such turbo machines. Types of turbomachines are, for example, centrifugal turbo machines and radial turbo machines. Such a turbo machine comprises an impeller, a bearing, and a shaft. In addition, such turbo machine can also comprise an impeller-sided bearing part and a bearing carrier. Said impeller is arranged on said shaft and said impeller can, at least partly, be closed by said impeller-sided bearing part. Further, said shaft is supported by said bearing and said bearing can be supported in and, at least partly, enclosed by said bearing carrier.

Further, such a turbo machine typically comprises an inlet (or inlet channel) configured to guide operating fluid, e.g., from an inlet opening, to said impeller, and an outlet or outlet channel configured to guide operating fluid from said impeller, e.g., to an outlet opening. Cryogenic turbo machines are used with operating fluid like gases or process gases (or fluids or process fluids) at cryogenic temperatures, i.e., very low temperatures of, e.g., less than -100°C or even down to -230°C or -250°C at the expander outlet or at the compressor inlet. Depending on the kind of turbo machine, such gases are compressed and/or expanded. Turbo machines in other applications can also be used with operating fluids at higher temperatures.

In a radial turbo machine, for example, the impeller-sided bearing part (enclosing the expansion impeller) can be connected to the bearing carrier or also formed with it from a single piece. The cold power can be extracted through a compressor impeller or through a generator connected to or arranged on said shaft. Such generator can, for example, also be connected via a gear box.

The cold power could, e.g., also be extracted via a brake in such a radial turbo machine, the fluid is expanded from high-pressure level to low pressure level. This expansion produces a high difference of temperature between the inlet (high-pressure area) and the outlet (low-pressure area). Typical values for hydrogen gas as operating fluid are, for example, an inlet temperature of -230°C and an outlet temperature at - 245°C, leading to a very low temperature in the expander impeller-sided bearing part.

In order to achieve an adequate isentropic efficiency and to maintain a positive temperature at the bearing level, the heat intakes have to be reduced as much as possible.

It has now been recognized that such heat input can be reduced by providing the turbo machine with a dry gas seal configured to seal the shaft, and/or when the shaft is configured as a hollow shaft. Such hollow shaft comprises, for example, an inside and, e.g., enclosed, space free of solid material.

The hollow shaft allows to reduce the cold transfer through the shaft and avoiding hydrogen (or other operating fluid) leakages from the high-pressure part to the low-pressure part (the bearing carrier). This also allows to minimize the heat intakes from the warm bearing carrier side to the cryogenic (expander) side.

The dry gas seal allows the tightening between the cryogenic part and the bearing or bearing carrier, even in case of gas barrier malfunction. The dry gas seal can be of different types of technology, e.g., single or tandem type, and with or without carbon rings or others.

In this way, a cryogenic fluid like hydrogen or others, at a temperature of below -180°C or even below -200°C, can be processed by operating such turbo machine. Such cryogenic fluid is, thus, used as process fluid being compressed and/or expanded by means of the turbo machine. Each of the hollow shaft and the dry gas seal allows sufficient isolation for these low temperatures.

In an embodiment, the turbo machine further comprises a thermal insulation component, wherein the thermal insulation component is arranged between the impeller and the dry gas seal. For example, the thermal insulation component is configured as a thermal insulation. Such thermal insulation plate can have an opening (i.e., the thermal insulation plate has the form of a ring or an annular shape), wherein the said shaft is arranged to protrude through said opening. One or more air gaps can be provided with the thermal insulation component or thermal insulation component.

A thermal insulation located in front of the dry gas seal allows to maintain a less cold temperature at the level of the dry gas. Such thermal insulation ring allows also to reduce the cold transfer migration from a pressurized hydrogen part to the bearing or bearing carrier.

The bearing carrier can be equipped with oil bearings, roller bearings, gas bearings or magnetic bearings; depending on the type of bearing, the bearing carrier can be formed or configured correspondingly.

This allows to separate the expander cryogenic part from its bearing carrier with minimized heat intakes and efficient sealing of the rotating shaft. Typical for such applications, labyrinth seals or carbon rings are used for the sealing. But in case of warm seal gas lost, the turbo machine has to be stopped as the cryogenic gas will migrate inside the bearing carrier. Using a dry gas seal for such application, however, even in case of injection gas lost, there is no obligation to stop the turbo machine. The invention allows also to reduce the cold transfer though the rotating shaft. The installation of dry gas seal (DGS) allows to avoid hydrogen leakages from the high-pressure part to the low-pressure part (the bearing carrier), even in case of gas barrier malfunction.

This invention is applicable for cryogenic rotating machines, like radial cryogenic expanders connected to an oil break or to a generator, turboexpanders, centrifugal compressors, axial turbines. The invention is particularly applicable where there is need to have a DGS (Dry Gas Seal) sealing technology compatible with low operating temperatures, e.g., between -200 to -272°C.

In general, operating such turbo machine for processing a cryogenic fluid, preferably, hydrogen, at a temperature of below -180°C or -200°C is advantageous. That is applicable for cryogenic gases like hydrogen but can also be used for other cryogenic gases like helium or others, usually operating between -200°C and -270°C.

Further advantages and embodiments of the invention will be apparent from the description and the accompanying drawing. The invention is illustrated schematically by means of embodiments in the drawing and is described below with reference to the drawing.

Short description of the figures
- Fig. 1: illustrates a turbo machine according to an embodiment of the invention.
- Fig. 2: illustrates parts of the turbo machine of Fig. 1.
- Fig. 3: illustrates parts of the turbo machine of Fig. 1 in a perspective view.
- Fig. 4: illustrates further parts of the turbo machine of Fig. 1.
- Fig. 5: illustrates a manufacturing method according to an embodiment of the invention.

Detailed description of the figures

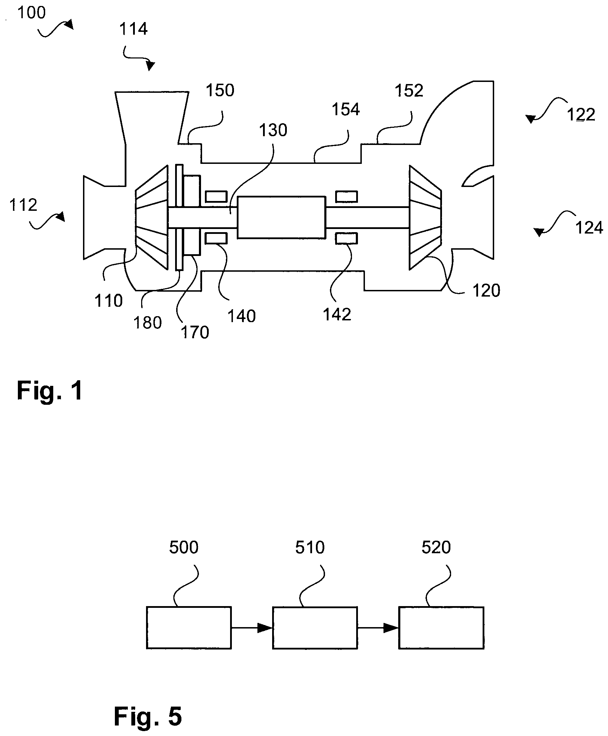

Fig. 1 schematically illustrates a turbo machine 100 according to an embodiment of the invention. The turbo machine 100, e.g., a cryogenic turbo machine is, by means of example, configured as a compressor and an expander, i.e., both are combined in one turbo machine.

Turbo machine 100 comprises, hence, two impellers, an impeller 110 and an impeller 120, both mounted on a shaft 130. The turbo machine 100 comprises channels 112 and 114 on the side of the impeller 110, the channels used respectively as inlet channel and outlet channel for the operating fluid to be compressed. The turbo machine 100 further comprises channels 122 and 124 on the side of the impeller 120, the channels used respectively as inlet channel and outlet channel for the operating fluid to be expanded. Thus, the impeller 110 is a compressor impeller and the impeller 120 is an expander impeller. The operating fluid to be compressed and the operating fluid to be expanded can have identical or can have different properties like pressure, temperature, chemical composition etc.

It is noted that a turbo machine could also have only one impeller mounted on one end of shaft and an electric machine, e.g., a generator or alternator, mounted on the other end of the shaft.

Further, the turbo machine 100 comprises a bearing 140 and, e.g., further bearing 142, for supporting said shaft 130. In the example shown, bearing 140 is provided on the side of the impeller 110, and bearing 142 is provided on the side of the impeller 120.

Further, the turbo machine 100 comprises an impeller-sided bearing part 150 and a bearing carrier 154. The impeller-sided bearing part 150 encloses impeller 110 at least partly. Another impeller-sided bearing part 152, for example, can enclose impeller 120 at least party. The bearing carrier 154 supports said bearing 140 and, e.g., also bearing 142. in addition, said bearing carrier 154 also encloses, at least partly, said bearing 140 and, e.g., also bearing 142.

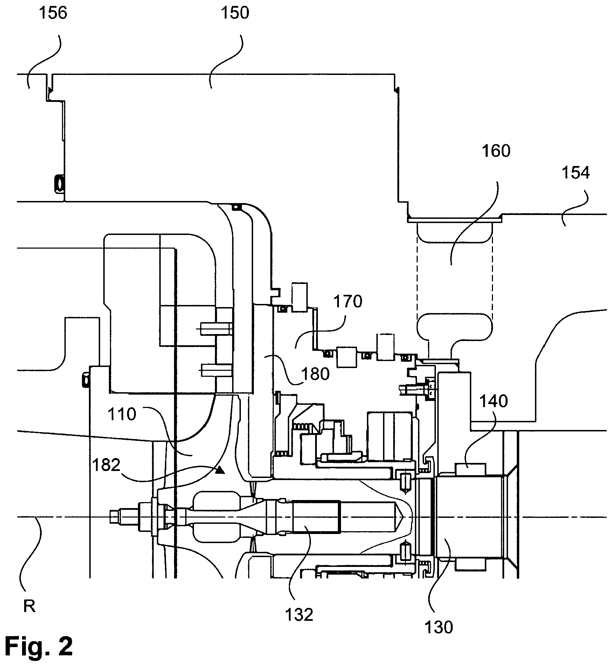

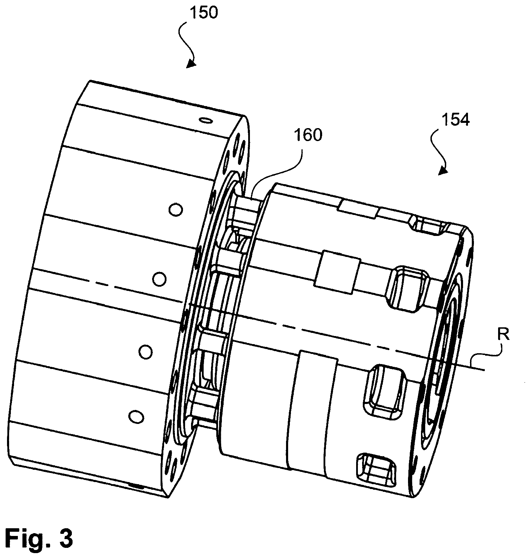

The impeller-sided bearing part 150 and the bearing carrier 154 are illustrated only very schematically in Fig. 1. More detailed views are shown in Fig. 2 and Fig. 3. The shaft 130 is configured as a hollow shaft; this is not visible in Fig. 1 but in Fig. 2.

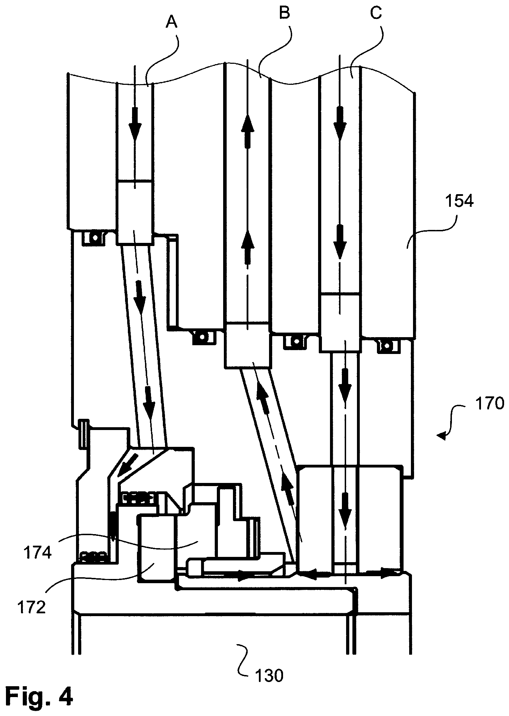

In addition, the turbo machine 100 comprises a dry gas seal 170 and a thermal insulation component 180, e.g., a thermal insulation plate. The dry gas seal 170 is configured to seal the shaft 130, i.e., the dry gas seal allows the tightening between the cryogenic part on the side of the impeller 110 and the bearing 140 or bearing carrier 154, even in case of gas barrier malfunction. More detailed views of the dry gas seal are shown in Fig. 2 and Fig. 4.

The thermal insulation component or plate 180 is arranged between the impeller 110 and the dry gas seal 170. The thermal insulation plate 180 has, by means of example, an opening (i.e., the thermal insulation plate has the form of a ring or an annular shape), wherein the said shaft 130 is arranged to protrude through said opening. Such thermal insulation located in front of the dry gas seal 170 allows to maintain a less cold temperature at the level of the dry gas. Such thermal insulation ring allows also to reduce the cold transfer migration from a pressurized hydrogen part to the bearing or bearing carrier.

Fig. 2 shows parts of the turbomachine 100 in more detail; in particular, the impeller-sided bearing part 150 and the bearing carrier 154 are shown, in addition to the shaft 130, the impeller 110 and the bearing 140. A rotation axis R is shown for better understanding.

Fig. 3 shows also parts of the turbomachine 100 in more detail and in a perspective view; in particular, the impeller-sided bearing part 150 and the bearing carrier 154 are shown. The rotation axis R is also shown for better understanding.

The turbo machine further comprises by means of example, as shown in Figs. 2 and 3, several connecting structures 160, which are, for example, rod shaped; only one of these connecting structures 160 is visible in the cross-section of Fig. 2, but several of them are visible in Fig. 3. In particular, these connecting structures 160 connecting structures are spaced apart from each other and arranged annularly around the shaft 130 as can be seen in Fig. 3 (the shaft itself is not shown in Fig. 3).

The impeller-sided bearing part 150 and the bearing carrier 154 are, as can be seen in Figs. 2 and 3, spatially spaced apart from each other (seen along the rotational axis R) and connected to each other by connecting structures 160. The impeller-sided bearing part 160, the bearing carrier 155 and the connecting structures 160 can, for example, form parts of a component made of a single piece, i.e., these parts can be provided integrally.

As can also be seen in Fig. 2, the dry gas seal 170 is located around the shaft 130, inside the impeller-sided bearing part 150 and arranged next to the bearing 140 and the bearing carrier 154. The dry gas seal 170 can be configured as a cartridge that can be inserted into the impeller-sided bearing part 150, for example. Several sealings like O-rings can be provided to seal the cartridge against the impeller-sided bearing part 150.

As can also be seen in Fig. 2, the thermal insulation plate 180 has an opening 182, wherein the said shaft 130 is arranged to protrude through said opening 182. Thermal insulation plate 180 is arranged between the impeller 110 and the dry gas seal 170 (or the dry gas seal cartridge). The shaft 130 is, as explained above, configured as a hollow shaft, i.e., the shaft comprises a, space 132 free of solid material in its inside.

Fig. 4 illustrates the dry gas seal 170 in more detail. Besides the dry gas seal 170, part of the shaft 130 at the lower end of Fig. 4 and part of the impeller-sided bearing part 154 in the upper part of Fig. 4 are shown. Two parts of the dry gas seal 170 are, among others, part 172 which is rotating with the shaft 130, and part 174 which is not rotating but stationary. Further, three channels A, B, C are illustrated which are used for a gas injection and/or connection. A flow of gas is indicated by means of arrows. These channels A, B, C are provided in the dry gas seal 170 itself and in the impeller-sided bearing part 154.

Channel A is used for injection of clean and dry process gas, e.g., cryogenic process gas, e.g., hydrogen, for which cryogenic process the turbomachine is used to process. This cryogenic process gas is provided at the side of the impeller 110. Channel C is used for injection of separation gas, e.g., nitrogen. Channel B is a connection to the flare or to a safe area and is used for mixing of the separation gas and the process gas. An advantage of the dry gas seal is that the leak from cold process to the flare is very small compared to other kind of dynamic sealing. Most of the flow to the flare comes from separation gas.

This type of dry gas seal is a single arrangement with a tertiary seal and allows sufficient sealing. It is noted that a single dry gas seal is sometimes not sufficient for hydrogen but can, e.g., be used in case of rotor dynamic issues with specific protection. As mentioned above, other types of dry gas seals can be used.

The dry gas seal and/or the hollow shaft reduce heat intake when operating such turbo machine at temperatures of below -180°C
Fig. 5 illustrates, by means of a flow diagram, a manufacturing method according to an embodiment of the invention. The method is for manufacturing a turbo machine as, e.g., shown in Figs. 1 to 4. Such turbo machine comprises an impeller, a bearing and a shaft. Said impeller is arranged on said shaft and said shaft is supported by said bearing.

The method comprises, in a step 500, providing a dry gas seal to the shaft. This can be in the form of a cartridge, for example. In a step 510, the shaft is provided as a hollow shaft.

In a step 520, a thermal insulation component, in particular, a thermal insulation plate, can be provided. Said thermal insulation component is arranged between the impeller and the dry gas seal. It is mentioned that each step 500, 510, 520 can be used independently from the others.

## Claims

1. A method for operating a turbo machine (100), the turbomachine comprising an impeller (110), a bearing (140), and a shaft (130), wherein said impeller (110) is arranged on said shaft (130), and wherein said shaft (130) is supported by said bearing (130),
wherein the turbo machine (100) further comprises a dry gas seal (170) configured to seal the shaft (130), and/or
wherein the shaft (130) is configured as a hollow shaft,
wherein operating the turbo machine comprises processing a cryogenic fluid at a temperature of below -180°C.

2. The method of claim 1, the turbo machine (100) further comprising a thermal insulation component (180), in particular, a thermal insulation plate, wherein the thermal insulation component is arranged between the impeller (110) and the dry gas seal (170).

3. The method of claim 2, wherein said thermal insulation component (180) is configured as a thermal insulation plate having an opening (182), wherein the said shaft (130) is arranged to protrude through said opening.

4. The method of any one of the preceding claims, the turbo machine (100) further comprising an impeller-sided bearing part (150) and a bearing carrier (154),
wherein said impeller (110) is, at least partly, enclosed by said impeller-sided bearing part (150), and
wherein said bearing (140) is supported in and, at least partly, enclosed by said bearing carrier (154).

5. The method of claim 4, wherein said impeller-sided bearing part (150) and said bearing carrier (154) are connected to another or are formed from as a single piece.

6. The method of any one of the preceding claims, the turbo machine (100) configured as a cryogenic turbo machine.

7. The method of any one of the preceding claims, the turbo machine (100) configured as at least one of: a centrifugal turbo machine, a radial turbo machine.

8. The method of any one of the preceding claims, the turbo machine (100) configured as at least one of: an expander, a compressor.

9. The method of any one of the preceding claims, wherein the bearing (140) is configured as one of: an oil bearing, a roller bearing, a gas bearing, a magnetic bearing.

10. The method of any one of the preceding claims for processing hydrogen as the cryogenic fluid.

11. A turbo machine (100) comprising an impeller (110), a bearing (140), and a shaft (130), wherein said impeller (110) is arranged on said shaft (130), and wherein said shaft (130) is supported by said bearing (130),
wherein the turbo machine (100) further comprises a dry gas seal (170) configured to seal the shaft (130), and/or
wherein the shaft (130) is configured as a hollow shaft,
wherein the turbo machine is configured for processing a cryogenic fluid at a temperature of below -180°C.

12. A method for manufacturing a turbo machine, said turbo machine comprising an impeller, a bearing, and a shaft, wherein said impeller is arranged on said shaft and wherein said shaft is supported by said bearing,
comprising:
Providing (500) a dry gas seal to seal the shaft, and/or
Providing (510) said shaft as a hollow shaft,
Wherein the turbo machine is configured for processing a cryogenic fluid at a temperature of below -180°C.

13. The method of claim 12, further comprising: Providing (520) a thermal insulation component, in particular, a thermal insulation plate, arranging said thermal insulation component between the impeller and the dry gas seal.
